# EUROPEAN PATENT APPLICATION

(11) **EP 0 729 777 A1**
(43) Date of publication of application: **04.09.1996**
(21) Application number: 96301269.5
(22) Date of filing: 26.02.1996
(51) Int. Cl.: B01D 53/68, B01D 53/70

(54) **Method for removing perfluorocarbon from a gas stream**

(30) Priority: 28.02.1995 US 395344
(71) Applicant: THE BOC GROUP, INC., Murray Hill, New Jersey 07974 (US)
(72) Inventor: Tamhankar, Satish S., Scotch Plains, New Jersey 07090 (US); Ramachandran, Ramakrishnan, Allendale, New Jersey 07401 (US); Smith, James Robert, Blackford, Somerset, BS28 4PA (GB)
(74) Representative: Bousfield, Roger James

(57) **Abstract**

A method of treating a perfluorocarbon containing gas stream to remove perfluorocarbon from the stream, comprising contacting the gas stream with a solid hydride compound, preferably with calcium hydride.

## Description

The present invention relates to a method in which a gas stream contaminated with per-fluorocarbons and other chemicals is treated by contacting the gas stream with a hydride at an elevated temperature.

In semiconductor fabrication techniques of plasma assisted chemical vapour deposition (PECVD), process gases are used in depositing materials on silicon wafers in one or more deposition stages. Since the deposition stages result in material being deposited on the interior of the processing chamber itself, the processing chamber must be cleaned at the conclusion of the deposition stages. In order to clean the interior of the processing chamber, a per-fluorocarbon, for example carbon tetrafluoride (CF₄) or hexafluoroethane (C₂F₆), and oxygen are commonly introduced into the processing chamber to react with materials which have been deposited on the walls of the chamber. When such per-fluorocarbons are introduced in to the chamber, they may be exposed to either radio frequency (RF) plasma glow discharge or to high temperatures and as a result they generally partially dis-associate and react with chamber contaminants to form gaseous by-products.

The resulting gas streams flowing from the process chamber will therefore often contain different gases including CF₄, C₂F₆, SF₆, NF₃, SiF₄, HF, CHF₃, CO₂, CO, COF₂ and WF₆.

In another fabrication technique known as plasma etching (PE), one or more of the above gases can be used selectively to remove material from the surface of silicon wafers.

Both PECVD and PE techniques tend to use excessive amounts of such gases and as a result the gas exhaust stream from the process chamber is likely to include one or more of the gases CF₄, C₂F₆, COF₂, CIF₃, SiF₄, SF₆, NF₃ and HF.

It is normal practice for the process chambers to be used with different process gas mixture in a sequential fashion. It is known that when perfluorocarbon gases are not included in the ingoing process mixture to the chamber they can be formed in situ in the chamber and are therefore present in the gas exhaust stream from the chamber. The perfluorocarbons are formed by reaction of fluorine-containing gases and carbon-containing compounds present in the chamber.

A method and apparatus for scrubbing gaseous exhaust streams for PECVD and PE process was described in our prior Specifications WO 89/11905 and WO 91/08041, the contents of which are incorporated herein by reference, which utilised, in its simplest form, a first stage of silicon and a second stage of calcium oxide both at elevated temperature, or vice versa.

It was, however, noted in our prior specifications that there might be certain difficulties in the scrubbing of nitrogen trifluoride (NF₃) and it was proposed that the addition of some copper to the silicon first stage assisted in the scrubbing of NF₃ from nitrogen gas streams in particular.

Despite the general efficacy of the methods described in our prior Specifications WO 89/11905 and WO 91/08041 for the scrubbing of exhaust streams from PECVD and PE processing, it has been found that there can in certain circumstances be difficulties in scrubbing of per-fluorocarbon compounds which were either unreacted in the chamber or which were formed in the chamber during the semiconductive fabrication processes.

For example, in a PECVD process, silane (SiH₄) and tungsten hexafluoride (WF₆) is caused to flow in to a process chamber and any unreacted gases would pass to the apparatus described in our prior specifications WO 89/11905 and WO 91/08041. After deposition on to a silicon wafer had been concluded and the coated wafer removed from the chamber, a cleaning step is then carried out in which a perfluorocarbon gas and oxygen mixture is caused to flow in to the chamber and, stimulated by a plasma discharge, these cleaning gases react to form an exhaust stream comprising predominantly of chloroflurocarbons, oxygen, WF₆ and SiF₄. Should diborane (B₂H₆) or phosphine (PH₃) gases be present in the PECVD process, then associated fluorine-containing compounds (BF₃ and PF₅) which can also be present in the exhaust gases from the cleaning process.

In another example, CHF₃ gas is added to a process chamber and, on reaction within the chamber, the CHF₃ partially decomposes to react with silicon oxide on the wafer. The reaction results in the production of SiF₄ but small quantities of tetrafluoro-methane (CF₄) or hexafluoro-ethane (C₂F₆) are also formed.

The present invention is concerned with an improved process for the completely satisfactory scrubbing of such perfluorocarbon compounds.

In accordance with the invention, there is provided a method of treating a perfluorocarbon containing gas stream to remove perfluorocarbon from the stream, comprising contacting the gas stream with a solid hydride compound.

A preferred solid hydride is calcium hydride. Alternative ones are sodium borahydride (NaBH₄), magnesium hydride (MgH₂) and lithium-aluminium hydride (LiAIH₄).

It is thought that through unknown chemical reactions the per-fluorocarbons will react with the hydride to produce a solid fluoride, for example calcium fluoride in the case of calcium hydride. The method of the invention can be incorporated into or used in connection with a gas reactor using a method of the type described in our prior Specifications WO 89/11905 and WO 91/08041.

When used in connection with a gas reactor of the type referred to above, the method of the invention may be directly incorporated in to the reaction and modified in any one of the following ways:
- i): the reactor comprises a first bed of calcium oxide, for example granular lime, (CaO), a second bed of the hydride, preferably calcium hydride, (CaH₂) mixed with silicon, preferably in metallic uncombined form, and a third bed comprising calcium oxide (CaO), for example granular lime
- ii): the reactor comprises a first bed of silicon, preferably in granular form and possibly treated to partially cover the silicon particles with copper if nitrogen trifluoride (NF₃) is to be scrubbed from the stream, a second bed comprising the hydride, preferably calcium hydride, mixed with silicon and a third bed comprising calcium oxide, preferably granular lime
- iii): the reactor comprises a first bed of a mixture of the hydride, preferably calcium, and silicon, preferably in granular form and possibly partially coated with copper as in ii) above, and a second bed comprising calcium oxide, preferably granular lime.
- iv): the reactor comprises a first bed of silicon, preferably in granular form and possibly partially coated with copper as in ii) and iii) above, a second bed of calcium oxide, preferably granular lime and a third bed of the hydride, preferably calcium hycride, and preferably mixed with one or both of silicon and calcium oxide, the latter again preferably being granular lime.

All beds are preferably packed into a single vessel so that the gas stream to be treated first enters the first bed, then erters the second bed, and, if present, subsequently enters the third bed. The vessel can be placed in a furnace to maintain the required reaction temperature or can be packaged within electrical heater elements.

Although the invention encompasses the use of a free standing bed of the hydride, preferably in any application of the present invention, the hydride is mixed with silicon particles or granular lime. Also, since hydrogen fluoride may be produced from the reaction between calcium hydride and per-fluorocarbons, the present invention is best utilised with a downstream bed of calcium oxide supplied in the form of granular lime. In any application of the invention, an upstream bed of granular lime can be used to treat acid gases present in the contaminated gas stream. Also in any application of the invention, the lime may be mixed with particles of metallic or uncombined silicon to prevent agglomeration of the lime.

In any silicon-containing bed, the silicon should be approximately at least about 95% pure. Also the mixture of silicon and calcium hydride should preferably be in a range of between about 25% and about 75% by weight of silicon. The mixture of calcium oxide and calcium hydride should preferably be about 25% and about 75% by weight of calcium oxide. The amount of calcium hydride to be used in a bed will of course be based upon performance requirements for the bed. In this regard, is was found by the inventor herein that calcium hydride has a removal capacity in a range of between about 20.0 and 40.0cm³ of either hexafluoroethane or carbon tetrafluoride per gram of calcium hydride.

The reaction temperature at which the per-fluorocarbon is contacted with the calcium hydride should be in a range of between about 450 and about 900°C. Any bed in accordance with the present invention should be maintained at a temperature within this temperature range. A particularly preferred temperature range in accordance with the present invention is between about 500 and about 600°C. This latter range is preferred for its lower temperatures. An operational temperature below about 600°C is particularly preferred. In plasma assisted chemical vapour disposition operations, per-fluorocarbons are used intermittently for the purpose of cleaning the equipment. At other times, the off-gas from such operation is essentially reducing in nature. If the temperature is maintained at or below 600°C, the calcium hydride will remain stable. Also, since other contaminants are removed first by the granular lime, they have no effect on the calcium hydride. Only ammonia may escape unaffected from the lime bed but it is not only not harmful to the calcium hydride but also may in fact be effective in preserving the calcium hydride by providing a reducing atmosphere.

In the case of the use of an alternative hydride, ie sodium borahydride, magnesium hydride and lithium-aluminium hydride, the reaction temperatures should be at least about 80°C and below about 300°C in the case of sodium borahydride, below about 250°C in the case of magnesium hydride and below about 120°C in the case of lithium aluminium hydride.

In an exemplified gas reactor employed a method in accordance with the invention, about 60g of granular calcium hydride (granules of about 1 mm in size) was packed in a 2.54cm diameter stainless steel vessel. In the same vessel, 50g of lime was packed so as to be directly downstream from the calcium hydride when in the vessel was in use. The reactor was heated to about 500° C and a flow of nitrogen through the vessel was initiated at a flow rate of about 1.0 litres per minute. A flow of about 2% by volume of hexafluoroethane was added to the flow of nitrogen when the reactor temperature as measured at the centre of the bed was stable at 454° C. The reactor temperature thereafter rose to 625° C within about 15 minutes and then slowly dropped to about 450° C after about one hour.

Throughout that time, the reactor outlet contained essentially no hexafluoroethane. For purposes of comparison, a reactor was constructed that contained metallic calcium in granular form (granules of between about 3 to about 5 millimetres in size) packed in a 2.54cm diameter stainless steel vessel. Approximately 50 to about 80 grams of material was used. After purging the reactor with nitrogen at a flow rate of about 500cm3 per minute, a gas stream containing 2% by volume of hexafluoroethane in nitrogen was added. The reactor was heated to 800°C. When the temperature reached about 685°C. only about 40% to about 50% of the hexafluoroethane was converted. Thus, it can be seen that the use of metallic calcium to treat per-fluorocarbons would only be effective with very dilute streams.

The method of the invention may usefully be employed in a gas reactor attached to the outlet of a primary vacuum pump used in conjunction with a processing pump and, as such, the reactor will be operating at pressures at or approaching atmospheric pressures.

Alternatively, the process of the invention may usefully be employed at lower, sub-atmospheric pressures, ie between that of the process chamber and atmospheric pressure, by connecting the reactor in any convenient location between the process chamber and its associated process vacuum pumps or in the pipeline between the process vacuum pumps (primary and secondary). It could also be connected between the stages of a vacuum pump to achieve the same effect.

## Claims

1. A method of treating a perfluorocarbon containing gas stream to remove perfluorocarbon from the stream, comprising contacting the gas stream with a solid hydride compound.

2. A method according to Claim 1 in which the hydride compound is calcium hydride (CaH₂).

3. A method according to Claim 1 in which the hydride compounds is one or more of sodium borahydride (NaBH₄), magnesium hydride (MgH₂) and lithium-aluminium hydride (LiAIH₄).

4. A method according to Claim 2 which is carried out at a temperature of from about 450 to 900°C.

5. A method according to Claim 4 in which the temperature is from about 500 to 700°C.

6. A method according to Claim 5 in which the temperature is less than about 600°C.

7. A method according to Claim 3 which is carried out with sodium borahydride at a temperature of from 80 to 300°C.

8. A method according to Claim 3 which is carried out with magnesium hydride at a temperature of from 80 to 250°C.

9. A method according to Claim 3 which is carried out with lithium-aluminium hydride at a temperature of 80 to 120°C.

10. A method according to any preceding claim in which the solid hydride is mixed with silicon.

11. A method according to any one of Claims 1 to 9 in which the solid hydride is mixed with calcium oxide.

12. A method according to Claim 10 or Claim 11 in which the solid hydride is calcium hydride.

13. A method according to any preceding claim in which the gas stream is contacted with a first stage comprising the solid hydride compound and subsequently with a second stage comprising calcium oxide.

14. A method according to any one of Claims 1 to 12 in which the gas stream is contacted with a first stage comprising calcium oxide and a second stage comprising the solid hydride compound.

15. A method according to any preceding claim in which the gas stream contains perfluorocarbons in the form of one or both of tetrafluoromethane and hexafluoroethane.

16. A method according to any preceding claim carried out at sub-atmospheric pressures.
